# EUROPEAN PATENT APPLICATION

(11) **EP 1 052 275 A1**
(43) Date of publication of application: **15.11.2000**
(21) Application number: 99303788.6
(22) Date of filing: 14.05.1999
(51) Int. Cl.: C09J 7/02

(54) **Double-sided adhesive tape**

(71) Applicant: Taiwan Hopax Chemicals Mfg., Co., Ltd, Feng-Shang City, Kaohsiung Hsien (TW)
(72) Inventor: Kuo, Tsung-Tien, Niao-sung Hsiang, Kaohsiung Hsien (TW); Hsieh, Hsieh-Chang, Feng-Shan City, Kaohsiung Hsien (TW); Lin, Ho-Tsai, Nan-Tzu Dist, Kaohsiung city (TW); Liu, Jen-Rong, feng-Shan City, Kaohsiung Hsien (TW)
(74) Representative: Ritter, Stephen David

(57) **Abstract**

A removable and repositionable double-sided adhesive tape (3) includes a substrate (31) having opposing top and bottom sides. Both sides are coated with a layer of a removable adhesive (312, 313), such as a pressure sensitive adhesive. One of the layers (312, 313)of the removable adhesive is thicker than the other one of the layers so that one of the layers (312, 313) possesses a higher degree of adhesion than the other one of the layers (312, 313).

## Description

This invention relates to a double-sided adhesive tape, more particularly to a removable and repositionable double-sided adhesive tape.

Double-sided adhesive tapes are well known in the art. Basically, a double-sided adhesive tape is made up of an adhesive material with or without a supporting substrate. The supporting substrate is normally made from a foamed material, such as styrene, polyurethane, or the like.

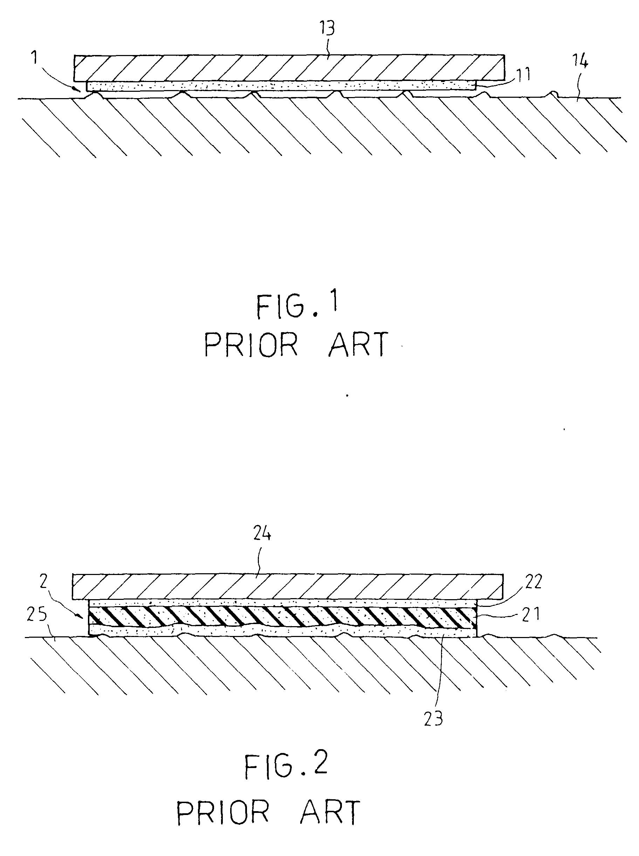

Fig. 1 illustrates a conventional double-sided adhesive tape without a substrate. This type of adhesive tape 1 includes an adhesive layer 11 having two opposing sides covered respectively with pieces of release paper (not shown). The release paper is a kind of paper coated with a release agent. The release agent may be any one of known pressure sensitive adhesives with strong adhesion. The adhesive tape 1 can be used for attaching an article 13 to a wall 14 by removing the release paper and by pressing the surfaces of the article 13 and the wall 14 against the two opposing sides of the adhesive layer 11, respectively.

Fig. 2 illustrates another conventional double-sided adhesive tape with a supporting substrate. The adhesive tape 2 includes a foamed substrate 21 having two opposing sides coated with adhesive layers 22, 23, respectively. Each of the adhesive layers 22, 23 is covered with a release paper (not shown). When in use, the release papers are removed from the adhesive tape 2, and the two opposing adhesive layers 22, 23 are attached respectively to the surfaces of an article 24 and a wall 25.

Conventionally, the two opposing adhesive layers 22, 23 of the double-sided adhesive tape 2 are made from an adhesive having strong adhesion characteristics, so that removal of the adhesive tape 2 from the article 24 and/or from the wall 25 can become very difficult. In most cases, the surface of the article 24 and the surface of the wall 25 may be damaged when the adhesive tape 2 is peeled off from the article and the wall.

In addition, the two opposing adhesive layers 22, 23 are made from the same adhesive material and have approximately the same thickness, so that they have substantially the same degree of adhesion. In such case, since objects to be adhered may possess significantly differing surface characteristics, one of the two adhesive layers 22, 23 may be unable to provide proper adhesion for the object bonded thereto.

Therefore, it is an object of the present invention to provide a double-sided adhesive tape that is removable and repositionable, and that includes two adhesive sides with different degrees of adhesion.

According to the present invention, a removable and repositionable double-sided adhesive tape comprises a substrate having opposing top and bottom sides, both of the top and bottom sides being coated respectively with top and bottom layers of a removable adhesive. One of the top and bottom layers is thicker than the other one so that said one of the top and bottom layers possesses a higher degree of adhesion than the other one.

In drawings which illustrate the preferred embodiment of the invention,
Fig. 1 is a side view of a conventional double-sided adhesive tape with two opposing sides adhered to an article and a wall, respectively;
Fig. 2 is a side view of another conventional double-sided adhesive tape with two opposing sides adhered to an article and a wall, respectively;
Fig. 3 is a fragmentary schematic view showing a reel of a double-sided adhesive tape embodying the present invention;
Fig. 4 is a sectional view showing a section of the double-sided adhesive tape of Fig. 3 with both sides adhering respectively to a wall and an article;
Fig. 5 is a perspective view of a large poster adhered to a wall via pieces of the double-sided adhesive tape of this invention; and
Fig. 6 is a fragmentary plan view showing a reel of another double-sided adhesive tape embodying the present invention.

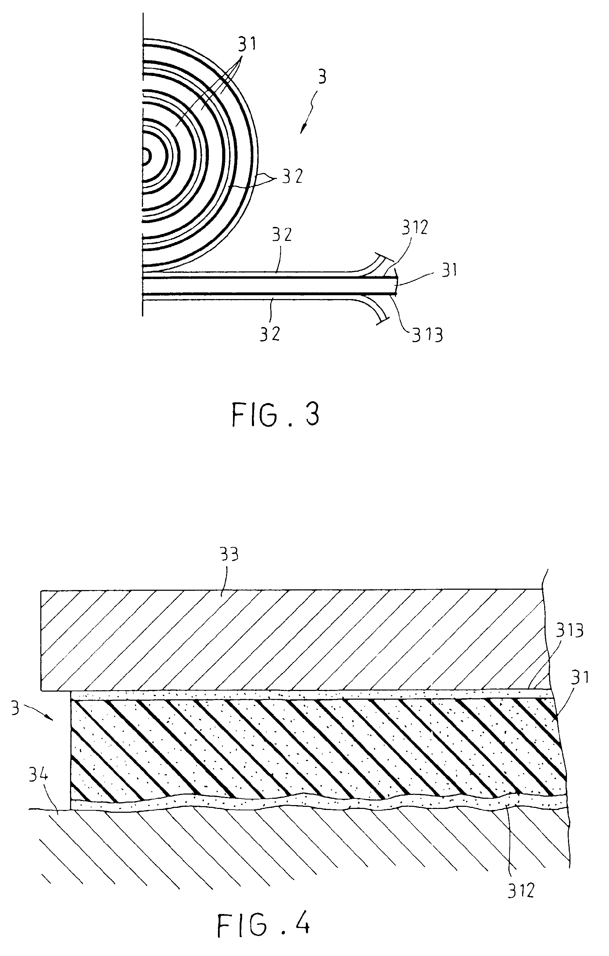

Fig. 3 illustrates a reel of a double-sided adhesive tape 3 embodying this invention. The double-sided adhesive tape 3 is made up of a substrate 31 with opposing top and bottom sides which are applied respectively with top and bottom layers 312, 313 of a removable adhesive to render the double-sided adhesive tape 3 removable and repositionable. Both top and bottom removable adhesive layers 312, 313 are covered with pieces of release paper 32. The removable adhesive may be any one of conventional removable pressure sensitive adhesives, preferably the adhesive includes elastomeric micro particles or microspheres. The substrate 31 may be made of a material selected from the group consisting of paper, plastic film, such as polyethylene and polyvinylethylene, rubber materials, and foamed materials, such as styrene and polyurethane. Preferably, the substrate 31 is soft or elastic and has an appropriate thickness. The top and bottom removable adhesive layers 312, 313 are formed into different thicknesses so as to provide different degrees of adhesion at two sides of the adhesive tape 3.

As illustrated in Fig. 4, the top and bottom layers 312, 313 of the removable adhesive tape 3 are adhered respectively to a wall 34 and an article 33. Due to significantly different surface characteristics between the article 33 and the wall 34, the top layer 312 is formed to be thicker than the bottom layer 313. When the top layer 312 is elastic and has a sufficient thickness, it can be bonded effectively to the uneven surface of the wall 34, and can be peeled off from the wall 34 without damaging the surface of the wall 34. The article 33 which is adhered to the bottom layer 313 having less thickness, may be detached easily from the bottom layer 313 without damaging itself or the adhesive tape 3.

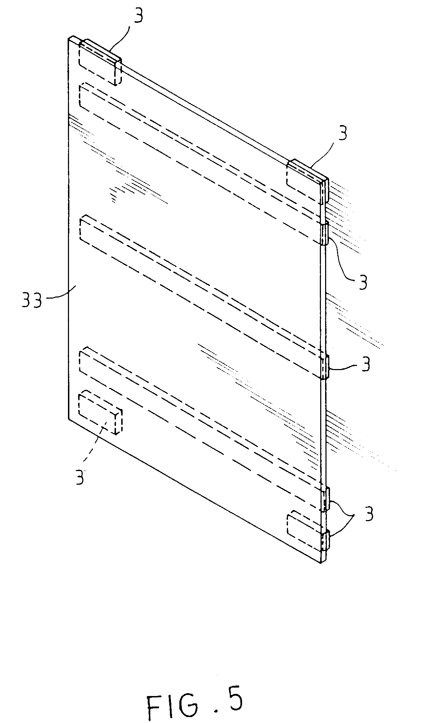

As illustrated in Fig. 5, when the article 33 adhered to the double-sided adhesive tape 3 is a large poster or the like, the double-sided adhesive tape 35 may be cut into pieces and posted at four corners of the poster. If the poster is relative heavy, more adhesive tape 3 can be used depending on the weight of the poster, for example, the double-sided adhesive tape 36 may be cut into elongated strips, and the strips may be applied on the poster in a manner as shown in Fig. 5.

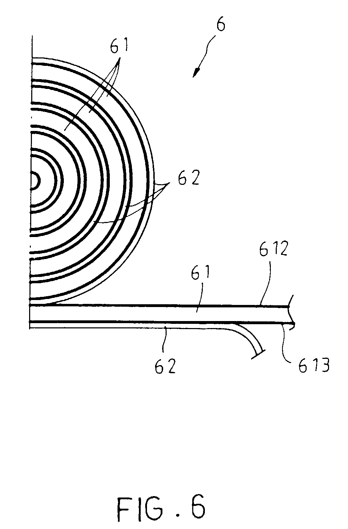

Fig. 6 illustrates another embodiment of this invention, wherein a reel of double-sided adhesive tape 6 includes a foamed substrate 61 with only one side covered with a release paper 62. However, both removable adhesive layers 612, 613 can be covered by the release paper 62 when the double-sided adhesive tape 6 is formed into a roll. Such an arrangement provides saving in the use of the release paper 62.

## Claims

1. A removable and repositionable double-sided adhesive tape characterized by a substrate (31) having opposing top and bottom sides, both of said top and bottom sides being coated respectively with top and bottom layers (312,313) of a removable adhesive, one of the top and the bottom layers (312, 313) of the removable adhesive being thicker than the other one so that said one of the top and bottom layers (312, 313) of the removable adhesive possesses a higher degree of adhesion than the other one.

2. The double-sided adhesive tape of Claim 1, characterized in that said removable adhesive is a pressure sensitive adhesive.
